# EUROPEAN PATENT APPLICATION

(11) **EP 4 663 379 A1**
(43) Date of publication of application: **17.12.2025**
(21) Application number: 24191956.2
(22) Date of filing: 31.07.2024
(51) Int. Cl.: B29C 63/02, B29C 63/00, B29L 31/34

(54) **FILM-STICKING DEVICE**

(30) Priority: 14.06.2024 CN 202410771033
(71) Applicant: Dongguan Pinjia Technology Co., Ltd., Dongguan (CN)
(72) Inventor: Liu, Xiaofen, Dongguan (CN)
(74) Representative: Metida

(57) **Abstract**

A film-sticking device comprises a positioning box body (1) with a placement slot (2) for receiving an electronic device (not shown) with a screen to which film is to be stuck, and a positioning frame (3) movably, preferably pivotably, arranged on the positioning box body (1) for mounting the film-sticking assembly (7). This allows the film-sticking assembly (7) to be conveniently aligned with the screen of the electronic device.

Preferably, a roller assembly (4) for pressing the film (7) onto the screen of the electronic device is slidably arranged on sliding rails (11) in the positioning box body. An elastic pad (6) may be provided, allowing the roller assembly (4) to transition from the positioning box body (1) to the screen of the electronic device. Positioning pins are ideally provided for engaging positioning holes provided on the film-sticking assembly (7).

## Description

### CROSS-REFERENCE TO RELATED APPLICATIONS

The present disclosure claims the priority of Chinese Invention Application No. CN202410771033.X, filed on June 14,2024, the entire contents of which are hereby incorporated by reference.

### FIELD

The present disclosure relates to the field of electronic device accessories, and more particularly to a film-sticking device.

### BACKGROUND

At present, electronic devices have become indispensable communication tools in people's lives. However, due to the frequent use of electronic devices, screens of the electronic devices are prone to getting dirty or even scratched. Generally, tempered glass films are used to protect the screens of the electronic devices. The tempered glass film has a self-adhesive property, when a part of the tempered glass film is attached to the screen of the electronic device, the attached area continues to expand until the whole tempered glass film is attached to the screen of the electronic device due to the own gravity of the tempered glass film without applying any external force.

There are some film-sticking devices can facilitate attaching films to the screen of the electronic device on the market. The film-sticking device usually includes a structure that can fix and position a tempered film assembly. When the film is attached to the electronic device, the electronic device is placed in the film-sticking device, and the tempered film assembly is positioned on the positioning structure of the film-sticking device, such that the tempered film assembly can be covered on the screen of the electronic device and aligned with the electronic device, thereby installing a tempered film on the screen of the electronic device. Although the film-sticking accuracy is improved with the above existing film-sticking device, most of the time, operators manually mount the tempered film assembly on the film-sticking device. The manual operation is cumbersome and may easily cause a positioning film in the tempered film assembly to detach from the tempered film, causing the failure of the positioning function, preventing the tempered film from being aligned with the screen of the electronic device, and thus causing the failure of the film-sticking process.

### SUMMARY

In order to solve the above technical problems, the present disclosure provides a film-sticking device.

The technical solution of the present disclosure is realized as follows.

A film-sticking device, wherein the film-sticking device includes a positioning box body, a placement slot is formed in the positioning box body and a positioning frame is movably arranged on the positioning box body for mounting film-sticking assembly.

In an embodiment, the positioning frame includes a rectangular positioning plate movably arranged on the positioning box body, and a rectangular positioning opening corresponding to the placement slot is formed in a middle portion of the positioning plate.

In an embodiment, two second mounting blocks are respectively arranged on two outer side walls of a connection position between the positioning frame and the positioning box body, the second mounting blocks are respectively clamped into two second mounting slots formed in the positioning box body.

In an embodiment, a pressing cover is movably arranged on the positioning box body; a sliding rail for mounting a roller assembly is arranged on the positioning box body, and two first mounting slots for mounting the pressing cover and two second mounting slots for mounting the positioning frame are formed in the positioning box body; and
at least one positioning block is arranged on the positioning box body for being aligned and engaging with the positioning frame.

In an embodiment, a roller assembly is slidably arranged on the positioning box body.

In an embodiment, the roller assembly includes a sliding frame and a pressure roller, two mounting portions are respectively arranged on two ends of the sliding frame and extend downward, the mounting portions are slidably mounted on the sliding rail, the pressure roller is axially connected between the two mounting portions, and a sliding block is arranged outside the corresponding mounting portion and is slidably mounted on the sliding rail, the pressure roller has a cylindrical structure with a variable diameter, and diameters of two end portions of the pressure roller are greater than a diameter of a middle portion of the pressure roller;
two sliding slots are formed in on both sides of the positioning box body adjacent to the sliding rail; and
a stable plate is arranged at a connection position between the sliding block and the mounting portion and is slidably mounted in the sliding slot; the sliding block and the stable plate are integrally connected to the corresponding mounting portion.

In an embodiment, an elastic pad is arranged in the positioning box body to allow the roller assembly to transition from the positioning box body to a screen of an electronic device located in the placement slot, and the elastic pad is moveable upwards and downwards.

In an embodiment, a receiving slot in communication with the placement slot is formed in the positioning box body, and the elastic pad extends from one side wall of the receiving slot away from the placement slot toward an other side wall of the receiving slot adjacent to the placement slot; and
a convex strip is arranged on one side of the elastic pad attached to an edge of the electronic device.

In an embodiment, an elastic portion corresponding to the elastic pad is arranged on the positioning frame.

In an embodiment, an elastic portion corresponding to the receiving slot is arranged on the positioning frame.

In an embodiment, a mounting hole is defined in the elastic portion for mounting a fastener; a second positioning member corresponding to a second positioning hole is arranged on one end of the positioning frame away from the elastic portion, and the second positioning member is inserted in the second positioning hole.

In an embodiment, the second positioning member has a cylindrical structure with a variable diameter, a diameter of an upper part of the second positioning member is less than a diameter of a lower part of the second positioning member; the second positioning hole has a diameter equal to the diameter of the upper part of the second positioning member, and the upper part of the second positioning member is inserted in the second positioning hole, and the positioning frame is supported by the lower part of the second positioning member.

In an embodiment, an elastic pad is arranged on the positioning box body, the elastic pad includes a protrusion, a plurality of first positioning members respectively corresponding to first positioning holes are arranged on the protrusion; and the first positioning members are respectively inserted in the first positioning holes

In an embodiment, the placement slot is a concave groove structure formed inside the positioning box body, a plurality of spacer strips and elastic strips are arranged in the placement slot, an avoidance opening is formed in the placement slot to avoid a camera assembly of an electronic device, the spacer strips are fixedly mounted on a bottom of the placement slot, and the elastic strips are attached to both inner walls of one end of the placement slot away from the elastic pad.

In an embodiment, the film-sticking device further includes the film-sticking assembly, the film-sticking assembly includes a positioning film, a pull film, and a protective film; the positioning film is attached to a top surface of the protective film, the protective film is attached to a bottom surface of the pull film, and at least one first positioning hole and at least one second positioning hole are defined in the positioning film; the film-sticking assembly further includes a fastener for mounting the positioning film to the positioning frame and detaching the positioning film from the positioning frame; and the film-sticking assembly is obliquely mounted on the positioning frame.

Compared with the prior art, the present disclosure has beneficial effects as follows.

Firstly, in the present disclosure, the rotatable positioning frame is movably arranged on the positioning box body, and the film-sticking assembly is mounted on the positioning frame. The user can directly turn over the positioning frame to cover the electronic device without manually mounting the film-sticking assembly on the positioning box body. With the positioning frame being aligned with the placement slot formed in the positioning box body, the film-sticking assembly can be easily and quickly aligned with the screen of the electronic device without manually adjusting the film-sticking assembly. When the electronic device is placed in the placement slot, the positioning frame and the film-sticking assembly mounted on the positioning frame can directly cover the electronic device without manual operation, which can avoid the situation where the positioning film detaches from the tempered film. The using method is simple and does not require excessive operation, which solves the problem that most of the existing film-sticking devices require operators to manually mount the tempered film-sticking assembly on the positioning box body, which is cumbersome and may easily cause the positioning film in the tempered film-sticking assembly to detach from the tempered film, and thus cause the failure of the positioning function, prevent the tempered film from being aligned with the screen of the electronic device, and cause the failure of the film-sticking process.

Secondly, in the present disclosure, with the roller assembly, the protective film can be attached to the electronic device by sliding the roller assembly, which simplifies the film-sticking process, saves time, and effectively improves the attachment degree and the attachment accuracy.

### BRIEF DESCRIPTION OF THE DRAWINGS

To describe the technical solutions in the embodiments of the present disclosure more clearly, the following briefly introduces the accompanying drawings required for describing the embodiments or the prior art. Apparently, the accompanying drawings in the following description show merely some embodiments of the present disclosure, and persons of ordinary skill in the art may still derive other drawings from these accompanying drawings without creative efforts.
FIG. 1 is a structural schematic view of a film-sticking device according to Embodiment 1 of the present disclosure (without a flip cover or a packaging box);
FIG. 2 is another structural schematic view of the film-sticking device according to Embodiment 1 of the present disclosure (without the flip cover or the packaging box);
FIG. 3 is a partially-enlarged view of a part A in FIG. 2;
FIG. 4 is an exploded view of the film-sticking device according to Embodiment 1 of the present disclosure (without the flip cover or the packaging box);
FIG. 5 is a structural schematic view of a positioning box body and a positioning frame according to Embodiment 1 of the present disclosure (with the flip cover and the packaging box);
FIG. 6 is a structural schematic view of a film-sticking device according to Embodiment 2 of the present disclosure;
FIG. 7 is another structural schematic view of the film-sticking device according to Embodiment 2 of the present disclosure;
FIG. 8 is a structural schematic view of a film-sticking device according to Embodiment 3 of the present disclosure;
FIG. 9 is a structural schematic view of a film-sticking device according to Embodiment 4 of the present disclosure;
FIG. 10 is a structural schematic schematic view of a film-sticking device according to Embodiment 5 of the present disclosure; and
FIG. 11 is another structural schematic view of a film-sticking device according to Embodiment 5 of the present disclosure.

### DESCRIPTION OF REFERENCE NUMERALS

1, positioning box body; 11, sliding rail; 12, first mounting slot; 13, second mounting slot; 14, sliding slot; 15, positioning block; 17, receiving slot; 2, placement slot; 21, spacer strip; 22, elastic strip; 23, avoidance opening; 24, bottom plate; 3, positioning frame; 31, second mounting block; 32, elastic portion; 33, mounting hole; 34, second positioning member; 35, positioning plate; 36, positioning opening; 37, engaging opening; 4, roller assembly; 41, sliding frame; 42, pressure roller; 43, mounting portion; 44, sliding block; 45, stable plate; 5, pressing cover; 51, first mounting block; 6, elastic pad; 61, convex strip; 62, protrusion; 63, first positioning member; 7, film-sticking assembly; 71, positioning film; 711, first positioning hole; 712, second positioning hole; 72, pull film; 73, protective film; 74, fastener; 8, disassembly opening; 9, flip cover; 10, packaging box; 100, scraper; 101, buckle hole; 102, limit buckle; 103, protective housing,

### DETAILED DESCRIPTION

In order to make the objectives, features, and advantages of the present disclosure more obvious and understandable, the technical solutions in the embodiments of the present disclosure will be clearly and completely described below in conjunction with the accompanying drawings of the embodiments of the present disclosure. It is apparent that the embodiments described below are only a part of the embodiments of the present disclosure, not all of them. Based on the embodiments of the present disclosure, all other embodiments obtained by those skilled in the art without creative effort fall within the scope of protection of the present disclosure.

### Embodiment 1

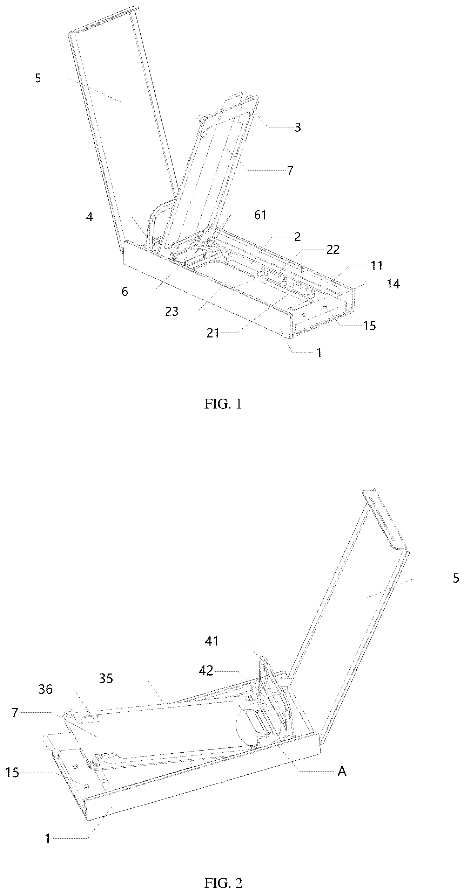

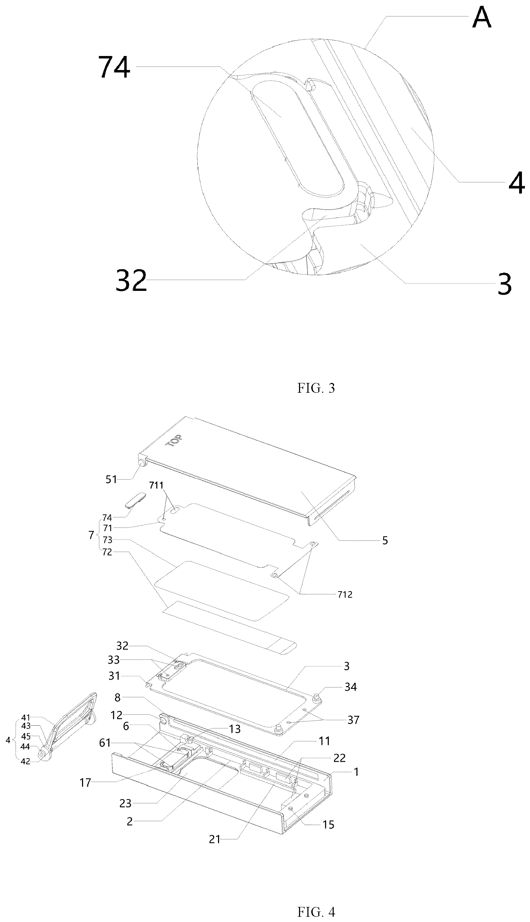

As shown in FIGS. 1 to 5, a film-sticking device includes a positioning box body 1. A placement slot 2 is formed in the positioning box body 1 and a positioning frame 3 is movably arranged on the positioning box body 1 for mounting a film-sticking assembly 7.

The positioning frame 3 includes a rectangular positioning plate 35 movably arranged on the positioning box body 1, and a rectangular positioning opening 36 corresponding to the placement slot 2 is formed in a middle of the positioning plate 35.

With the movable positioning frame 3 mounted on the positioning box body 1, the positioning frame 3 can be aligned with the placement slot 2, and a roller assembly 4 slides after the positioning frame 3 covers an electronic device, which can realize the function of attaching a film to the electronic device.

Two second mounting blocks 31 are respectively arranged on two outer side walls of a connection position between the positioning frame 3 and the positioning box body 1, and the second mounting blocks 31 can be respectively clamped into two second mounting slots 13 formed in the positioning box body 1.

A pressing cover 5 is movably arranged on the positioning box body 1. The pressing cover 5 can be used as a top cover of the positioning box body 1, which can prevent the positioning frame 3 or other components inside the positioning box body 1 from falling out of the positioning box body 1. A sliding rail 11 is arranged on the positioning box body 1 for mounting the roller assembly 4. Two first mounting slots 12 for mounting the pressing cover 5 and the second mounting slots 13 for mounting the positioning frame 3 are formed in the positioning box body 1. The pressing cover 5 is rotatably connected to the positioning box body 1 to be the top cover of the positioning box body 1 which can be turned over. The positioning frame 3 is rotatably connected to the positioning box body 1 and can freely rotate around a connection position between the positioning frame 3 and the positioning box body 1. The roller assembly 4 can slide on the sliding rail 11.

At least one positioning block 15 for being aligned and engaging with the positioning frame 3 is arranged on the positioning box body 1.

In this embodiment, during the film-sticking process, since the positioning frame 3 is aligned with the placement slot 2, the film-sticking assembly 7 can be conveniently and quickly aligned with a screen of the electronic device. Since the positioning frame 3 is normally aligned with the placement slot 2, the positioning frame 3 can be turned over to expose the placement slot 2, the electronic device can be placed into the placement slot 2, and then the positioning frame 3 is rotated to cover the electronic device. When the positioning frame 3 covers the electronic device, the positioning frame 3 engages with the positioning block 15, and the film-sticking assembly 7 mounted on the positioning frame 3 is covered on the screen of the electronic device. Then, the film-sticking work can be completed by sliding the roller assembly 4, which is simple and has a high film-sticking accuracy.

A disassembly opening 8 is formed in the sliding rail 11, and the disassembly opening 8 has a width equal to a width of a sliding block 44.

Two first mounting blocks 51 are arranged on both outer side walls of a connection position between the pressing cover 5 and the positioning box body 1, the two first mounting blocks 51 can be respectively clamped into the first mounting slots 12 formed in the positioning box body 1.

In this embodiment, the pressing cover 5 and the positioning frame 3 are both movable components rotatably mounted on the positioning box body 1, thus, the pressing cover 5, the positioning frame 3, and the positioning box body 1 form a complete tool for attaching a film to the electronic device. The positioning box body 1 receives the electronic device, and the positioning frame 3 aligns the film-sticking assembly 7 with the screen of the electronic device, ensuring that the film can be precisely attached to the electronic device.

The roller assembly 4 is slidably arranged on the positioning box body 1.

The roller assembly 4 includes a sliding frame 41 and a pressure roller 42. Two mounting portions 43 are respectively arranged on two ends of the sliding frame 41, extending downward and being slidably mounted in the sliding rail 11. The pressure roller 42 is axially connected between the two mounting portions 43. A sliding block 44 is arranged on an exterior of the corresponding mounting portion 43 and is slidably mounted on the sliding rail 11. The pressure roller 42 has a cylindrical structure with a variable diameter. Diameters of two end portions of the pressure roller 42 are greater than a diameter of a middle portion of the pressure roller 42. Such configuration allows the pressure roller 42 to be attached to the electronic device with a curved screen edge more tightly.

Two sliding slots 14 are formed in both sides of the positioning box body 1 adjacent to the sliding rail 11.

A stable plate 45 is arranged on a connection position between the sliding block 44 and the mounting portion 43, and the stable plate 45 is slidably mounted in the sliding slot 14. The sliding block 44 and the stable plate 45 are integrally connected to the mounting portion 43. The stable plate 45 can ensure that the roller assembly 4 keeps sliding in a straight line during the film-sticking process. With the sliding block 44, the roller assembly 4 can slide without deviating from the positioning box body 1, allowing the film-sticking process to be more stable.

Furthermore, an elastic pad 6 is arranged on the positioning box body 1, allowing the roller assembly 4 to transition from the positioning box body 1 to the screen of the electronic device in the placement slot 2. The elastic pad 6 is capable of moving up and down.

Furthermore, a receiving slot 17 in communication with the placement slot 2 is formed in the positioning box body 1, and the elastic pad 6 extends from one side wall of the receiving slot 17 away from the placement slot 2 to the other side wall of the receiving slot 2 adjacent to the placement slot 2.

A convex strip 61 is arranged on one side of the elastic pad 6 being attached to an edge of the electronic device. Since one edge of the electronic device contacts one side of the elastic pad 6 during the film-sticking process, the elastic pad 6 moves up and down during the film-sticking process, which may easily cause a large-area friction on the edge of the electronic device. With the convex strip 61, the friction area between the elastic pad 6 and the edge of the electronic device is greatly reduced, which can avoid the large-area friction between the electronic device and the elastic pad 6, and at the same time fix the electronic device.

With the elastic pad 6 arranged on the positioning box body 1 and the roller assembly 4, during the film-sticking process, the protective film 73 in the film-sticking assembly 7 can be attached more tightly to the screen of the electronic device by sliding the roller assembly 4. The roller assembly 4 presses the film-sticking assembly 7, allowing the film-sticking assembly 7 to be attached to the electronic device more tightly. The elastic pad 6 applies an upward reset force to the film-sticking assembly 7, the protective film 73 is at first attached to one side of the screen of the electronic device adjacent to the elastic pad 6 when the roller assembly 4 slides from one end of the positioning box body 1 adjacent to the elastic pad 6 to the other end of the positioning box body 1. Once the side of the screen of the electronic device adjacent to the elastic pad 6 is tightly attached to the protective film 73, the roller assembly 4 further slides on the protective film 73 from one end of the electronic device to the other end of the electronic device.

An elastic portion 32 corresponding to the elastic pad 6 is arranged on the positioning frame 3.

A mounting hole 33 is formed in the elastic portion 32 for mounting the fastener 74, a second positioning member 34 corresponding to the second positioning hole 712 is arranged on the end of the positioning frame 3 away from the elastic portion 32, and the second positioning member 34 is inserted in the second positioning hole 712.

The second positioning member 34 has a cylindrical structure with a variable diameter, and a diameter of an upper part of the second positioning member 34 is less than a diameter of a lower part thereof. The second positioning hole 712 has a diameter equal to the diameter of the upper part of the second positioning member 34, the upper part of the second positioning member 34 is inserted in the second positioning hole 712, and the positioning frame 3 is supported by the lower part of the second positioning member 34.

The placement slot 2 is a concave groove structure formed inside the positioning box body 1. A plurality of spacer strips 21 and elastic strips 22 are arranged in the placement slot 2. An avoidance opening 23 is formed in the placement slot 2 to receive and avoid a camera assembly of the electronic device. The spacer strips 21 are fixedly mounted on a bottom of the placement slot 2, and the elastic strips 22 are attached to both inner walls of one end of the placement slot 2 away from the elastic pad 6.

With the compression and rebound characteristics of the elastic strips 22 arranged in the placement slot 2, a frame with elasticity can be formed by arranging multiple elastic strips 22 on the inner wall of the placement slot 2 to be adapted with electronic devices of various sizes, thereby improving the adaptability of the placement slot 2.

Furthermore, a flip cover 9 is connected to an exterior of the positioning box body 1 for covering the placement slot 2 of the positioning box body 1. The film-sticking device further includes a packaging box 10 for accommodating the positioning box body 1. The flip cover 9 includes three interconnected parts and creases are formed between the three parts. The three parts of the flip cover 9 can be folded to form a rectangular housing to enclose the positioning box body 1. One part of the flip cover 9 is attached to a bottom of the positioning box body 1, and the other part of the flip cover 9 can be turned over to cover one side and a top surface of the positioning box body 1. The part of the flip cover 9 attached to the bottom of the positioning box body 1 has an area equal to that of the part of the flip cover 9 covering the top of the positioning box body 1. The flip cover 9 can be used a protective housing for the positioning box body 1, the flip cover 9 and the packaging box 10 cooperatively form the external packaging structure of the product.

An engaging opening 37 corresponding to the positioning block 15 is formed in one end of the positioning plate 35 away from the elastic portion 32. The engagement between the engaging opening 37 and the positioning block 15 can ensure that the positioning frame 3 is securely mounted on the positioning box body 1. An opening area of the positioning opening 36 is less than that of the placement slot 2.

The film-sticking device further includes a film-sticking assembly 7, including a positioning film 71, a pull film 72, and the protective film 73. The positioning film 71 is attached to a top surface of the protective film 73, and the pull film 72 is attached to a bottom surface of the protective film 73. At least one first positioning hole 711 and at least one second positioning hole 712 are defined in the positioning film 71. The film-sticking assembly 7 further includes a fastener 74 for attaching the positioning film 71 to the positioning frame 3 and detaching the positioning film 71 from the positioning frame 3. The film-sticking assembly 7 is securely mounted to the positioning frame 3 through the fastener 74, which can prevent the film-sticking assembly 7 from falling off and ensures the alignment and uniformity between the film-sticking assembly 7 and the positioning frame 3, thereby guaranteeing accurate attachment. The film-sticking assembly 7 is obliquely installed on the positioning frame 3, and the end in which the second positioning hole 712 is defined is higher than the end on which the fastener 74 is arranged.

### Embodiment 2

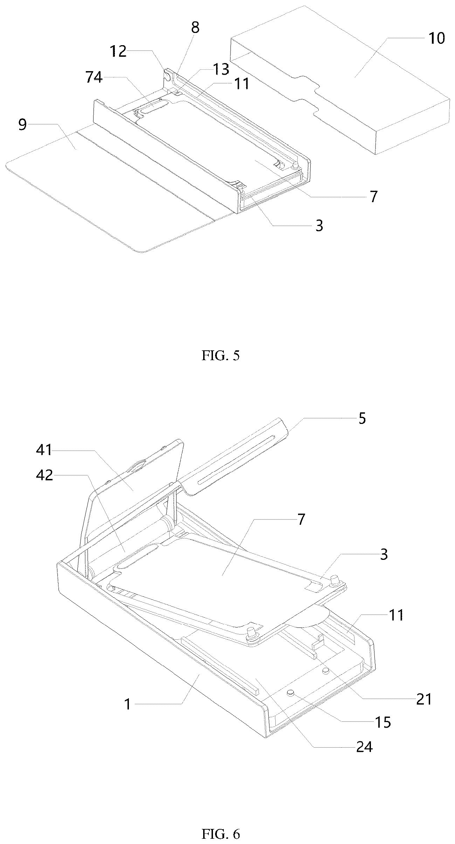

As shown in FIGS. 6 to 7, a film-sticking device includes a positioning box body 1. A placement slot 2 is formed in the positioning box body 1 and a positioning frame 3 movably arranged on the positioning box body 1 for mounting a film-sticking assembly 7.

The positioning frame 3 includes a rectangular positioning plate 35 movably arranged on the positioning box body 1, and a rectangular positioning opening 36 corresponding to the placement slot 2 is formed in a middle of the positioning plate 35.

With the movable positioning frame 3 mounted on the positioning box body 1, the positioning frame 3 can be aligned with the placement slot 2, and a roller assembly 4 slides after the positioning frame 3 covers an electronic device, which can realize the function of attaching a film to the electronic device.

Two second mounting blocks 31 are respectively arranged on two outer side walls of a connection position between the positioning frame 3 and the positioning box body 1, and the second mounting blocks 31 can be respectively clamped into two second mounting slots 13 formed in the positioning box body 1.

A pressing cover 5 is movably arranged on the positioning box body 1. The pressing cover 5 can be used as a top cover of the positioning box body 1, which can prevent the positioning frame 3 or other components inside the positioning box body 1 from falling out of the positioning box body 1. A sliding rail 11 is arranged on the positioning box body 1 for mounting the roller assembly 4. Two first mounting slots 12 for mounting the pressing cover 5 and the second mounting slots 13 for mounting the positioning frame 3 are formed in the positioning box body 1. The pressing cover 5 is rotatably connected to the positioning box body 1 to be the top cover of the positioning box body 1 which can be turned over. The positioning frame 3 is rotatably connected to the positioning box body 1 and can freely rotate around a connection position between the positioning frame 3 and the positioning box body 1. The roller assembly 4 can slide on the sliding rail 11.

At least one positioning block 15 for being aligned and engaging with the positioning frame 3 is arranged on the positioning box body 1.

In this embodiment, during the film-sticking process, since the positioning frame 3 is aligned with the placement slot 2, the film-sticking assembly 7 can be conveniently and quickly aligned with a screen of the electronic device. Since the positioning frame 3 is normally aligned with the placement slot 2, the positioning frame 3 can be turned over to expose the placement slot 2, the electronic device can be placed into the placement slot 2, and then the positioning frame 3 is rotated to cover the electronic device. When the positioning frame 3 covers the electronic device, the positioning frame 3 engages with the positioning block 15, and the film-sticking assembly 7 mounted on the positioning frame 3 is covered on the screen of the electronic device. Then, the film-sticking work can be completed by sliding the roller assembly 4, which is simple and has a high film-sticking accuracy.

Furthermore, a disassembly opening 8 is formed in the sliding rail 11, and the disassembly opening 8 has a width equal to a width of a sliding block 44.

Two first mounting blocks 51 are arranged on both outer side walls of a connection position between the pressing cover 5 and the positioning box body 1, the two first mounting blocks 51 can be respectively clamped into the first mounting slots 12 formed in the positioning box body 1.

In this embodiment, the pressing cover 5 and the positioning frame 3 are both movable components rotatably mounted on the positioning box body 1, thus, the pressing cover 5, the positioning frame 3, and the positioning box body 1 form a complete tool for attaching a film to the electronic device. The positioning box body 1 receives the electronic device, and the positioning frame 3 aligns the film-sticking assembly 7 with the screen of the electronic device, ensuring that the film can be precisely attached to the electronic device.

Furthermore, the roller assembly 4 is slidably arranged on the positioning box body 1.

The roller assembly 4 includes a sliding frame 41 and a pressure roller 42. Two mounting portions 43 are respectively arranged on two ends of the sliding frame 41, extending downward and being slidably mounted in the sliding rail 11. The pressure roller 42 is axially connected between the two mounting portions 43. A sliding block 44 is arranged on an exterior of the corresponding mounting portion 43 and is slidably mounted on the sliding rail 11. The pressure roller 42 has a cylindrical structure with a variable diameter. Diameters of two end portions of the pressure roller 42 are greater than a diameter of a middle portion of the pressure roller 42. Such configuration allows the pressure roller 42 to be attached to the electronic device with a curved screen edge more tightly.

In this embodiment, the sliding frame 41 is plate shaped, and a strip-shaped groove is formed in the pressing cover 5 for avoiding the mounting portions 43 arranged on both sides of the sliding frame 41. The sliding frame 41 is located on the pressing cover 5, and when the sliding frame 41 slides, the mounting portions 43 move in the strip-shaped groove, such that the sliding frame 41 can be pulled to attach the film while the pressing cover 5 is tightly covered on the positioning box body 1.

Two sliding grooves 14 are formed in two sides of the positioning box body 1 adjacent to the sliding rail 11.

A stable plate 45 is arranged on a connection position between the sliding block 44 and the mounting portion 43, and the stable plate 45 is slidably mounted in the sliding slot 14. The sliding block 44 and the stable plate 45 are integrally connected to the mounting portion 43. The stable plate 45 can ensure that the roller assembly 4 keeps sliding in a straight line during the film-sticking process. With the sliding block 44, the roller assembly 4 can slide without deviating from the positioning box body 1, allowing the film-sticking process to be more stable.

An elastic pad 6 is arranged on the positioning box body 1, allowing the roller assembly 4 to transition from the positioning box body 1 to the screen of the electronic device in the placement slot 2. The elastic pad 6 is capable of moving up and down.

A receiving slot 17 in communication with the placement slot 2 is formed in the positioning box body 1, and the elastic pad 6 extends from one side wall of the receiving slot 17 away from the placement slot 2 to the other side wall of the receiving slot 2 adjacent to the placement slot 2.

A convex strip 61 is arranged on one side of the elastic pad 6 being attached to an edge of the electronic device. Since one edge of the electronic device contacts one side of the elastic pad 6 during the film-sticking process, the elastic pad 6 moves up and down during the film-sticking process, which may easily cause a large-area friction on the edge of the electronic device. With the convex strip 61, the friction area between the elastic pad 6 and the edge of the electronic device is greatly reduced, which can avoid the large-area friction between the electronic device and the elastic pad 6, and at the same time fix the electronic device.

In this embodiment, the elastic pad 6 is arranged on the positioning box body 1, a protrusion 62 is arranged on the elastic pad 6. A plurality of first positioning members 63 corresponding to first positioning holes 711 are arranged on the protrusion 62.

The first positioning members 63 are respectively inserted in the first positioning holes 711.

With the elastic pad 6 arranged on the positioning box body 1 and the roller assembly 4, during the film-sticking process, the protective film 73 in the film-sticking assembly 7 can be attached more tightly to the screen of the electronic device by sliding the roller assembly 4, The roller assembly 4 presses the film-sticking assembly 7, ensuring the film-sticking assembly 7 to be attached to the screen of the electronic device. Due to an upward reset force from the elastic pad 6 arranged on the film-sticking assembly 7, when the roller assembly 4 slides one end of the positioning box body 1 adjacent to the elastic pad 6 to the other end of the positioning box body 1, the protective film 73 is at first attached to the side of the screen of the electronic device adjacent to the elastic pad 6. Once the side of the screen of the electronic device adjacent to the elastic pad 6 reaches a tightly attached state, the roller assembly 4 further slides on the protective film 73 from one end of the electronic device to the other end of the electronic device.

An elastic portion 32 corresponding to the elastic pad 6 is arranged on the positioning frame 3.
a mounting hole 33 is formed in the elastic portion 32 for mounting the fastener 74, a second positioning member 34 corresponding to the second positioning hole 712 is arranged on the end of the positioning frame 3 away from the elastic portion 32, and the second positioning member 34 is inserted in the second positioning hole 712.

The second positioning member 34 has a cylindrical structure with a variable diameter, and a diameter of an upper part of the second positioning member 34 is less than a diameter of a lower part thereof. The second positioning hole 712 has a diameter equal to the diameter of the upper part of the second positioning member 34, and the upper part of the second positioning member 34 is inserted in the second positioning hole 712 defined in a positioning film 71 and the positioning frame 3 is supported by the lower part of the second positioning member 34.

Furthermore, the placement slot 2 is a concave groove structure formed inside the positioning box body 1. A plurality of spacer strips 21 and elastic strips 22 are arranged in the placement slot 2. An avoidance opening 23 is formed in the placement slot 2 to receive and avoid a camera assembly of the electronic device. The spacer strips 21 are fixedly installed at a bottom of the placement slot 2, and the elastic strips 22 are attached to both inner walls of one end of the placement slot 2 away from the elastic pad 6.

With the compression and rebound characteristics of the elastic strips 22 arranged in the placement slot 2, a frame with elasticity can be formed by arranging multiple elastic strips 22 on the inner wall of the placement slot 2 to be adapted with electronic devices of various sizes, thereby improving the adaptability of the placement slot 2.

Furthermore, a flip cover 9 is connected to an exterior of the positioning box body 1 for covering the placement slot 2 of the positioning box body 1. The film-sticking device further includes a packaging box 10 for accommodating the positioning box body 1. The flip cover 9 includes three interconnected parts and creases are formed between the three parts. The three parts of the flip cover 9 can be folded to form a rectangular housing to enclose the positioning box body 1. One part of the flip cover 9 is attached to the bottom of the positioning box body 1, and the other part of the flip cover 9 can be turned over to cover one side and a top surface of the positioning box body 1. The part of the flip cover 9 attached to the bottom of the positioning box body 1 has an area equal to an area of the part of the flip cover 9 covering the top surface of the positioning box body 1. The flip cover 9 can be used as a protective housing for the positioning box body 1, the flip cover 9 and the packaging box 10 cooperatively form the external packaging structure of the product.

Furthermore, an engaging opening 37 corresponding to the positioning block 15 is formed in one end of the positioning plate 35 away from the elastic portion 32. The engagement between the engaging opening 37 and the positioning block 15 can ensure that the positioning frame 3 is securely mounted on the positioning box body 1. An opening area of the positioning opening 36 is less than that of the placement slot 2.

The film-sticking device further includes the film-sticking assembly 7, including a positioning film 71, a pull film 72, and the protective film 73. The positioning film 71 is attached to a top surface of the protective film 73, and the pull film 72 is attached to a bottom surface of the protective film 73. The first positioning holes 711 and the second positioning holes 712 are defined in the positioning film 71. The film-sticking assembly 7 further includes a fastener 74 for attaching the positioning film 71 to the positioning frame 3 and detaching the positioning film 71 from the positioning frame 3. The film-sticking assembly 7 is securely mounted to the positioning frame 3 through the fastener 74, which can prevent the film-sticking assembly 7 from falling off and ensures the alignment and uniformity between the film-sticking assembly 7 and the positioning frame 3, thereby guaranteeing accurate attachment. The film-sticking assembly 7 is obliquely installed on the positioning frame 3, and the end in which the second positioning hole 712 is defined is higher than the end on which the fastener 74 is arranged.

### Embodiment 3

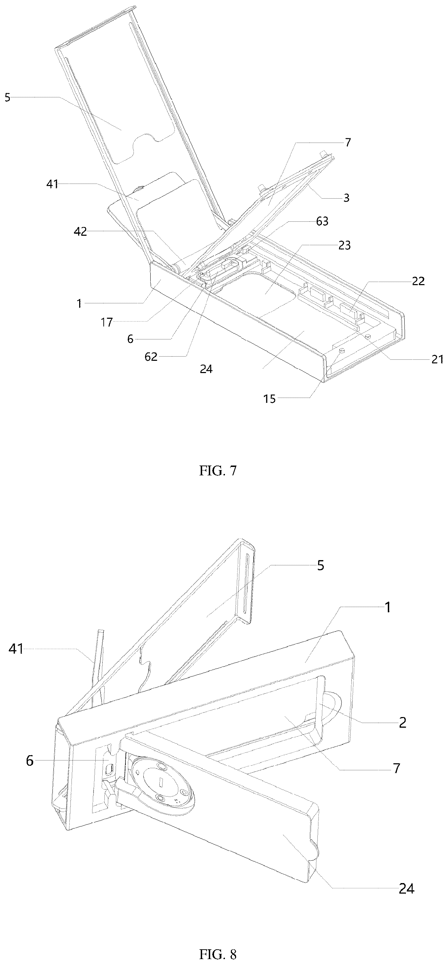

As shown in FIG. 8, a film-sticking device includes a positioning box body 1. A placement slot 2 is formed in the positioning box body 1 and a positioning frame 3 is movably arranged on the positioning box body 1 for mounting a film-sticking aseembly 7.

The positioning frame 3 includes a rectangular positioning plate 35 movably arranged on the positioning box body 1, and a rectangular positioning opening 36 corresponding to the placement slot 2 is formed in a middle of the positioning plate 35.

With the movable positioning frame 3 mounted on the positioning box body 1, the positioning frame 3 can be aligned with the placement slot 2, and a roller assembly 4 slides after the positioning frame 3 covers an electronic device, which can realize the function of attaching a film to the electronic device.

Two second mounting blocks 31 are respectively arranged on two outer side walls of a connection position between the positioning frame 3 and the positioning box body 1, and the second mounting blocks 31 can be respectively clamped into two second mounting slots 13 formed in the positioning box body 1.

A pressing cover 5 is movably arranged on the positioning box body 1. The pressing cover 5 can be used as a top cover of the positioning box body 1, which can prevent the positioning frame 3 or other components inside the positioning box body 1 from falling out of the positioning box body 1. A sliding rail 11 is arranged on the positioning box body 1 for mounting the roller assembly 4. Two first mounting slots 12 for mounting the pressing cover 5 and the second mounting slots 13 for mounting the positioning frame 3 are formed in the positioning box body 1. The pressing cover 5 is rotatably connected to the positioning box body 1 to be the top cover of the positioning box body 1 which can be turned over. The positioning frame 3 is rotatably connected to the positioning box body 1 and can freely rotate around a connection position between the positioning frame 3 and the positioning box body 1. The roller assembly 4 can slide on the sliding rail 11.

At least one positioning block 15 for being aligned and engaging with the positioning frame 3 is arranged on the positioning box body 1.

In this embodiment, during the film-sticking process, since the positioning frame 3 is aligned with the placement slot 2, the film-sticking assembly 7 can be conveniently and quickly aligned with a screen of the electronic device. Since the positioning frame 3 is normally aligned with the placement slot 2, the positioning frame 3 can be turned over to expose the placement slot 2, the electronic device can be placed into the placement slot 2, and then the positioning frame 3 is rotated to cover the electronic device. When the positioning frame 3 covers the electronic device, the positioning frame 3 engages with the positioning block 15, and the film-sticking assembly 7 mounted on the positioning frame 3 is covered on the screen of the electronic device. Then, the film-sticking work can be completed by sliding the roller assembly 4, which is simple and has a high film-sticking accuracy.

A disassembly opening 8 is formed in the sliding rail 11, and the disassembly opening 8 has a width equal to a width of a sliding block 44.

Two first mounting blocks 51 are arranged on both outer side walls of a connection position between the pressing cover 5 and the positioning box body 1, the two first mounting blocks 51 can be respectively clamped into the first mounting slots 12 formed in the positioning box body 1.

In this embodiment, the pressing cover 5 and the positioning frame 3 are both movable components rotatably mounted on the positioning box body 1, thus, the pressing cover 5, the positioning frame 3, and the positioning box body 1 form a complete tool for attaching a film to the electronic device. The positioning box body 1 receives the electronic device, and the positioning frame 3 aligns the film-sticking assembly 7 with the screen of the electronic device, ensuring that the film can be precisely attached to the electronic device.

The roller assembly 4 is slidably arranged on the positioning box body 1.

The roller assembly 4 includes a sliding frame 41 and a pressure roller 42. Two mounting portions 43 are respectively arranged on two ends of the sliding frame 41, extending downward and being slidably mounted in the sliding rail 11. The pressure roller 42 is axially connected between the two mounting portions 43. A sliding block 44 is arranged on an exterior of the corresponding mounting portion 43 and is slidably mounted on the sliding rail 11. The pressure roller 42 has a cylindrical structure with a variable diameter. Diameters of two end portions of the pressure roller 42 are greater than a diameter of a middle portion of the pressure roller 42. Such configuration allows the pressure roller 42 to be attached to the electronic device with a curved screen edge more tightly.

In this embodiment, the sliding frame 41 is plate shaped, and a strip-shaped groove is formed in the pressing cover 5 for avoiding the mounting portions 43 arranged on both sides of the sliding frame 41. The sliding frame 41 is located on the pressing cover 5, and when the sliding frame 41 slides, the mounting portions 43 move in the strip-shaped groove, such that the sliding frame 41 can be pulled to perform film bonding while the pressing cover 5 is tightly covered on the positioning box body 1.

Two sliding grooves 14 are formed in two sides of the positioning box body 1 adjacent to the sliding rail 11.

A stable plate 45 is arranged on a connection position between the sliding block 44 and the mounting portion 43, and the stable plate 45 is slidably mounted in the sliding slot 14. The sliding block 44 and the stable plate 45 are integrally connected to the mounting portion 43. The stable plate 45 can ensure that the roller assembly 4 keeps sliding in a straight line during the film-sticking process. With the sliding block 44, the roller assembly 4 can slide without deviating from the positioning box body 1, allowing the film-sticking process to be more stable.

An elastic pad 6 is arranged on the positioning box body 1, allowing the roller assembly 4 to transition from the positioning box body 1 to the screen of the electronic device in the placement slot 2. The elastic pad 6 is capable of moving up and down.

A receiving slot 17 in communication with the placement slot 2 is formed in the positioning box body 1, and the elastic pad 6 extends from one side wall of the receiving slot 17 away from the placement slot 2 to the other side wall of the receiving slot 2 adjacent to the placement slot 2.

A convex strip 61 is arranged on one side of the elastic pad 6 being attached to an edge of the electronic device. Since one edge of the electronic device contacts one side of the elastic pad 6 during the film-sticking process, the elastic pad 6 moves up and down during the film-sticking process, which may easily cause a large-area friction on the edge of the electronic device. With the convex strip 61, the friction area between the elastic pad 6 and the edge of the electronic device is greatly reduced, which can avoid the large-area friction between the electronic device and the elastic pad 6, and at the same time fix the electronic device.

In this embodiment, the elastic pad 6 is arranged on the positioning box body 1, and a protrusion 62 is arranged on the elastic pad 6. A plurality of first positioning members 63 corresponding to the first positioning holes 711 are arranged on the protrusion 62,.

The first positioning members 63 are respectively inserted in the first positioning holes 711.

With the elastic pad 6 arranged on the positioning box body 1 and the roller assembly 4, during the film-sticking process, the protective film 73 in the film-sticking assembly 7 can be attached more tightly to the screen of the electronic device by sliding the roller assembly 4, The roller assembly 4 presses the film-sticking assembly 7, ensuring the film-sticking assembly 7 to be attached to the screen of the electronic device. Due to an upward reset force from the elastic pad 6 arranged on the film-sticking assembly 7, when the roller assembly 4 slides one end of the positioning box body 1 adjacent to the elastic pad 6 to the other end of the positioning box body 1, the protective film 73 is at first attached to the side of the screen of the electronic device adjacent to the elastic pad 6. Once the side of the screen of the electronic device adjacent to the elastic pad 6 reaches a tightly attached state, the roller assembly 4 further slides on the protective film 73 from one end of the electronic device to the other end of the electronic device.

An elastic portion 32 corresponding to the elastic pad 6 is arranged on the positioning frame 3.

A mounting hole 33 is formed in the elastic portion 32 for mounting the fastener 74, a second positioning member 34 corresponding to the second positioning hole 712 is arranged on the end of the positioning frame 3 away from the elastic portion 32, and the second positioning member 34 is inserted in the second positioning hole 712.

The second positioning member 34 has a cylindrical structure with a variable diameter, and a diameter of an upper part of the second positioning member 34 is less than a diameter of a lower part thereof. The second positioning hole 712 has a diameter equal to the diameter of the upper part of the second positioning member 34, and the upper part of the second positioning member 34 is inserted in the corresponding second positioning hole 712 defined in a positioning film 71 and the positioning frame 3 is supported by the lower part of the second positioning member 34.

Furthermore, the placement slot 2 is hollow, and a bottom plate 24 is rotatably arranged on the bottom of the positioning box body 1 and is located below the placement slot 2.

With the bottom plate 24 rotatably connected to the bottom of the positioning box body 1, the electronic device can be directly placed inside the positioning box body 1. By rotating the bottom plate 24, the electronic device is conveyed to the placement slot 2 inside the positioning box body 1 for attaching the film to the electronic device, making the film-sticking process simpler.

Furthermore, the placement slot 2 is a concave groove structure formed inside the positioning box body 1. A plurality of spacer strips 21 and elastic strips 22 are arranged in the placement slot 2. An avoidance opening 23 is formed in the placement slot 2 to receive and avoid a camera assembly of the electronic device. The spacer strips 21 are fixedly installed at a bottom of the placement slot 2, and the elastic strips 22 are attached to both inner walls of one end of the placement slot 2 away from the elastic pad 6.

With the compression and rebound characteristics of the elastic strips 22 arranged in the placement slot 2, a frame with elasticity can be formed by arranging multiple elastic strips 22 on the inner wall of the placement slot 2 to be adapted with electronic devices of various sizes, thereby improving the adaptability of the placement slot 2.

Furthermore, a flip cover 9 is connected to an exterior of the positioning box body 1 for covering the placement slot 2 of the positioning box body 1. The film-sticking device further includes a packaging box 10 for accommodating the positioning box body 1. The flip cover 9 includes three interconnected parts and creases are formed between the three parts. The three parts of the flip cover 9 can be folded to form a rectangular housing to enclose the positioning box body 1. One part of the flip cover 9 is attached to the bottom of the positioning box body 1, and the other part of the flip cover 9 can be turned over to cover one side and a top surface of the positioning box body 1. The part of the flip cover 9 attached to the bottom of the positioning box body 1 has an area equal to that of the part of the flip cover 9 covering the top surface of the positioning box body 1. The flip cover 9 can be used as a protective housing for the positioning box body 1, the flip cover 9 and the packaging box 10 cooperatively form the external packaging structure of the product.

Furthermore, an engaging opening 37 corresponding to the positioning block 15 is formed in one end of the positioning plate 35 away from the elastic portion 32. The engagement between the engaging opening 37 and the positioning block 15 can ensure that the positioning frame 3 is securely mounted on the positioning box body 1. An opening area of the positioning opening 36 is less than that of the placement slot 2.

Furthermore, the film-sticking device further includes the film-sticking assembly 7, including a positioning film 71, a pull film 72, and the protective film 73. The positioning film 71 is attached to a top surface of the protective film 73, and the pull film 72 is attached to a bottom surface of the protective film 73. The first positioning holes 711 and the second positioning holes 712 are defined in the positioning film 71. The film-sticking assembly 7 further includes a fastener 74 for attaching the positioning film 71 to the positioning frame 3 and detaching the positioning film 71 from the positioning frame 3. The film-sticking assembly 7 is securely mounted to the positioning frame 3 through the fastener 74, which can prevent the film-sticking assembly 7 from falling off and ensures the alignment and uniformity between the film-sticking assembly 7 and the positioning frame 3, thereby guaranteeing accurate attachment. The film-sticking assembly 7 is obliquely installed on the positioning frame 3, and the end in which the second positioning hole 712 is defined is higher than the end on which the fastener 74 is arranged.

### Embodiment 4

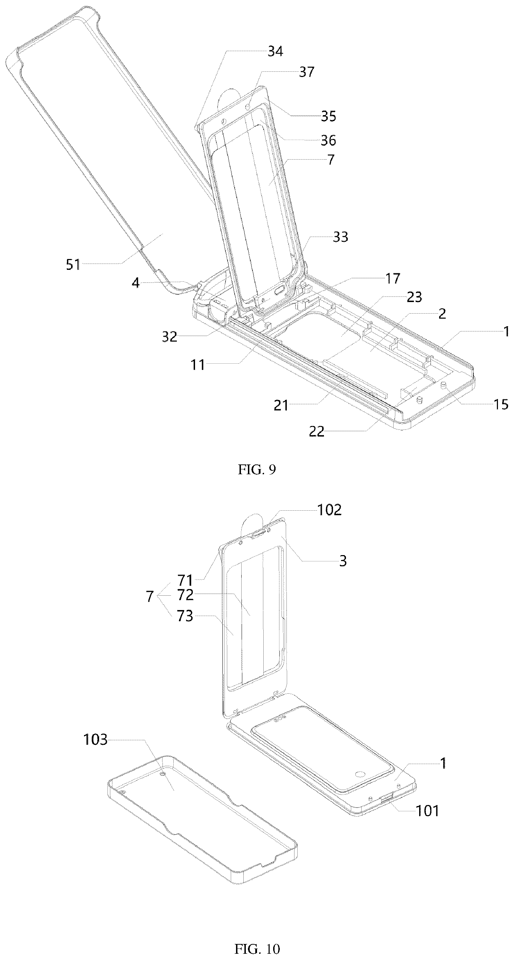

As shown in FIG. 9, a film-sticking device includes a positioning box body 1. A placement slot 2 is formed in the positioning box body 1 and a positioning frame 3 that is movably arranged on the positioning box body 1 for mounting a film-sticking assembly 7.

The positioning frame 3 includes a rectangular positioning plate 35 movably arranged on the positioning box body 1, and a rectangular positioning opening 36 corresponding to the placement slot 2 is formed in a middle of the positioning plate 35.

With the movable positioning frame 3 mounted on the positioning box body 1, the positioning frame 3 can be aligned with the placement slot 2, and a roller assembly 4 slides after the positioning frame 3 covers an electronic device, which can realize the function of attaching a film to the electronic device.

Two second mounting blocks 31 are respectively arranged on two outer side walls of a connection position between the positioning frame 3 and the positioning box body 1, and the second mounting blocks 31 can be respectively clamped into two second mounting slots 13 formed in the positioning box body 1.

A pressing cover 5 is movably arranged on the positioning box body 1. The pressing cover 5 can be used as a top cover of the positioning box body 1, which can prevent the positioning frame 3 or other components inside the positioning box body 1 from falling out of the positioning box body 1. A sliding rail 11 is arranged on the positioning box body 1 for mounting the roller assembly 4. Two first mounting slots 12 for mounting the pressing cover 5 and the second mounting slots 13 for mounting the positioning frame 3 are formed in the positioning box body 1. The pressing cover 5 is rotatably connected to the positioning box body 1 to be the top cover of the positioning box body 1 which can be turned over. The positioning frame 3 is rotatably connected to the positioning box body 1 and can freely rotate around a connection position between the positioning frame 3 and the positioning box body 1. The roller assembly 4 can slide on the sliding rail 11.

At least one positioning block 15 for being aligned and engaging with the positioning frame 3 is arranged on the positioning box body 1.

In this embodiment, during the film-sticking process, since the positioning frame 3 is aligned with the placement slot 2, the film-sticking assembly 7 can be conveniently and quickly aligned with a screen of the electronic device. Since the positioning frame 3 is normally aligned with the placement slot 2, the positioning frame 3 can be turned over to expose the placement slot 2, the electronic device can be placed into the placement slot 2, and then the positioning frame 3 is rotated to cover the electronic device. When the positioning frame 3 covers the electronic device, the positioning frame 3 engages with the positioning block 15, and the film-sticking assembly 7 mounted on the positioning frame 3 is covered on the screen of the electronic device. Then, the film-sticking work can be completed by sliding the roller assembly 4, which is simple and has a high film-sticking accuracy.

A disassembly opening 8 is formed in the sliding rail 11, and the disassembly opening 8 has a width equal to a width of a sliding block 44.

Two first mounting blocks 51 are arranged on both outer side walls of a connection position between the pressing cover 5 and the positioning box body 1, the two first mounting blocks 51 can be respectively clamped into the first mounting slots 12 formed in the positioning box body 1.

In this embodiment, the pressing cover 5 and the positioning frame 3 are both movable components rotatably mounted on the positioning box body 1, thus, the pressing cover 5, the positioning frame 3, and the positioning box body 1 form a complete tool for attaching a film to the electronic device. The positioning box body 1 receives the electronic device, and the positioning frame 3 aligns the film-sticking assembly 7 with the screen of the electronic device, ensuring that the film can be precisely attached to the electronic device.

The roller assembly 4 is slidably arranged on the positioning box body 1.

The roller assembly 4 includes a sliding frame 41 and a pressure roller 42. Two mounting portions 43 are respectively arranged on two ends of the sliding frame 41, extending downward and being slidably mounted in the sliding rail 11. The pressure roller 42 is axially connected between the two mounting portions 43. A sliding block 44 is arranged on an exterior of the corresponding mounting portion 43 and is slidably mounted on the sliding rail 11. The pressure roller 42 has a cylindrical structure with a variable diameter. Diameters of two end portions of the pressure roller 42 are greater than a diameter of a middle portion of the pressure roller 42. Such configuration allows the pressure roller 42 to be attached to the electronic device with a curved screen edge more tightly.

A receiving slot 17 in communication with the placement slot 2 is formed in the positioning box body 1.

An elastic portion 32 corresponding to the receiving slot 17 is arranged on the positioning frame 3.

A mounting hole 33 is formed in the elastic portion 32 for mounting the fastener 74, a second positioning member 34 corresponding to the second positioning hole 712 is arranged on the end of the positioning frame 3 away from the elastic portion 32, and the second positioning member 34 is inserted in the second positioning hole 712.

With the elastic portion 32 arranged on the positioning frame 3 and the roller assembly 4, during the film-sticking process, the protective film 73 in the film-sticking assembly 7 can be attached more tightly to the screen of the electronic device by sliding the roller assembly 4, The roller assembly 4 presses the film-sticking assembly 7, ensuring the film-sticking assembly 7 to be attached to the screen of the electronic device. Due to an upward reset force from the elastic portion 32 arranged on the positioning frame 3, when the roller assembly 4 slides one end of the positioning box body 1 adjacent to the elastic portion 32 to the other end of the positioning box body 1, the protective film 73 is at first attached to the side of the screen of the electronic device adjacent to the elastic portion 32. Once the side of the screen of the electronic device adjacent to the elastic portion 32 reaches a tightly attached state, the roller assembly 4 further slides on the protective film 73 from one end of the electronic device to the other end of the electronic device.

The second positioning member 34 has a cylindrical structure with a variable diameter, and a diameter of an upper part of the second positioning member 34 is less than a diameter of a lower part thereof. The second positioning hole 712 has a diameter equal to the diameter of the upper part of the second positioning member 34, and the upper part of the second positioning member 34 is inserted in the corresponding second positioning hole 712 defined in a positioning film 71 and the positioning frame 3 is supported by the lower part of the second positioning member 34.

The placement slot 2 is a concave groove structure formed inside the positioning box body 1. A plurality of spacer strips 21 and elastic strips 22 are arranged in the placement slot 2. An avoidance opening 23 is formed in the placement slot 2 to receive and avoid a camera assembly of the electronic device. The spacer strips 21 are fixedly installed at a bottom of the placement slot 2.

With the compression and rebound characteristics of the elastic strips 22 arranged in the placement slot 2, a frame with elasticity can be formed by arranging multiple elastic strips 22 on the inner wall of the placement slot 2 to be adapted with electronic devices of various sizes, thereby improving the adaptability of the placement slot 2.

Furthermore, a flip cover 9 is connected to an exterior of the positioning box body 1 for covering the placement slot 2 of the positioning box body 1. The film-sticking device further includes a packaging box 10 for accommodating the positioning box body 1. The flip cover 9 includes three interconnected parts and creases are formed between the three parts. The three parts of the flip cover 9 can be folded to form a rectangular housing to enclose the positioning box body 1. One part of the flip cover 9 is attached to the bottom of the positioning box body 1, and the other part of the flip cover 9 can be turned over to cover one side and a top surface of the positioning box body 1. The part of the flip cover 9 attached to the bottom of the positioning box body 1 has an area equal to that of the part of the flip cover 9 covering the top surface of the positioning box body 1. The flip cover 9 can be used as a protective housing for the positioning box body 1, the flip cover 9 and the packaging box 10 cooperatively form the external packaging structure of the product.

Furthermore, an engaging opening 37 corresponding to the positioning block 15 is formed in one end of the positioning plate 35 away from the elastic portion 32. The engagement between the engaging opening 37 and the positioning block 15 can ensure that the positioning frame 3 is securely mounted on the positioning box body 1. An opening area of the positioning opening 36 is less than that of the placement slot 2.

Furthermore, the film-sticking device further includes the film-sticking assembly 7, including a positioning film 71, a pull film 72, and the protective film 73. The positioning film 71 is attached to a top surface of the protective film 73, and the pull film 72 is attached to a bottom surface of the protective film 73. At least one first positioning hole 711 and at least one second positioning hole 712 are formed in the positioning film 71. The film-sticking assembly 7 further includes a fastener 74 for attaching the positioning film 71 to the positioning frame 3 and detaching the positioning film 71 from the positioning frame 3. The film-sticking assembly 7 is securely mounted to the positioning frame 3 through the fastener 74, which can prevent the film-sticking assembly 7 from falling off and ensures the alignment and uniformity between the film-sticking assembly 7 and the positioning frame 3, thereby guaranteeing accurate attachment. The film-sticking assembly 7 is obliquely installed on the positioning frame 3, and the end in which the second positioning hole 712 is defined is higher than the end on which the fastener 74 is arranged.

### Embodiment 5

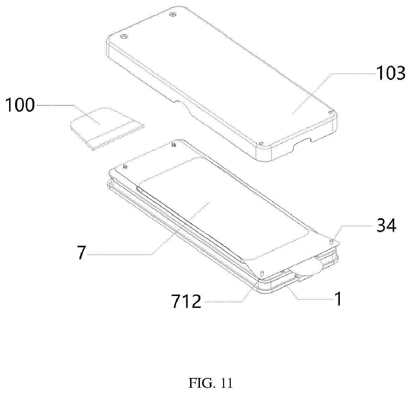

As shown in FIGS. 10 to 11, a film-sticking device includes a positioning box body 1 and a scraper 100. A placement slot 2 is formed in the positioning box body 1 and a positioning frame 7 for mounting a film-sticking assembly 7 is movably arranged on the positioning box body 1.

The film-sticking device further includes the film-sticking assembly 7. The film-sticking assembly 7 includes a positioning film 71, a pull film 72 and a protective film 73, the positioning film 71 is attached to a top surface of the protective film 73, and a bottom surface of the protective film 73 is attached to the pull film 72. At least one first positioning hole 711 and at least one second positioning hole 712 are defined in the positioning film 71.

One end of the positioning frame 3 is hinged to one end of the positioning box body 1, and the other end of the positioning frame 3 is provided with a second positioning member 34 corresponding to the second positioning hole 712.

A buckle hole 101 is defined in one end of the positioning box body 1 away from a connection position between the positioning box body 1 and the positioning frame 3.

A limit buckle 102 corresponding to the buckle hole 10 is arranged on one end of the positioning frame 3.

A protective housing 103 is arranged on an exterior of the positioning box body 1 to cover the positioning box body 1.

In this embodiment, the electronic device is placed inside the positioning box body 1, and the positioning frame 3 with the rotatable film-sticking assembly 7 is rotated to cover the electronic device. The limit buckle 102 engages with the buckle hole 101 to fix the positioning box body 1 and the positioning frame 3 together preventing the positioning box body 1 from moving relative to the positioning frame 3. The film-sticking assembly is pressed and the pull film 72 is drawn out, ensuring that the protective film 73 is properly attached to a screen of the electronic device. Subsequently, the scraper 100 is used to scrape the other side of the protective film 73, allowing the protective film 73 to be attached to the screen of the electronic device more tightly.

It is understandable that the above-mentioned technical features may be used in any combination without limitation. The above descriptions are only the embodiments of the present disclosure, which do not limit the scope of the present disclosure. Any equivalent structure or equivalent process transformation made by using the content of the description and drawings of the present disclosure, or directly or indirectly applied to other related technologies in the same way, all fields are included in the scope of patent protection of the present disclosure.

## Claims

1. A film-sticking device, wherein the film-sticking device comprises a positioning box body (1), a placement slot (2) is formed in the positioning box body (1) and a positioning frame (3) is movably arranged on the positioning box body (1) for mounting film-sticking assembly (7).

2. The film-sticking device according to claim 1, wherein the positioning frame (3) comprises a rectangular positioning plate (35) movably arranged on the positioning box body (1), and a rectangular positioning opening (36) corresponding to the placement slot (2) is formed in a middle portion of the positioning plate (35).

3. The film-sticking device according to claim 1, wherein two second mounting blocks (31) are respectively arranged on two outer side walls of a connection position between the positioning frame (3) and the positioning box body (1), the second mounting blocks (31) are respectively clamped into two second mounting slots (13) formed in the positioning box body (1).

4. The film-sticking device according to claim 1, wherein a pressing cover (5) is movably arranged on the positioning box body (1); a sliding rail (11) for mounting a roller assembly (4) is arranged on the positioning box body (1), and two first mounting slots (12) for mounting the pressing cover (5) and two second mounting slots (13) for mounting the positioning frame (3) are formed in the positioning box body (1); and
at least one positioning block (15) is arranged on the positioning box body (1) for being aligned and engaging with the positioning frame (3).

5. The film-sticking device according to claim 1, wherein a roller assembly (4) is slidably arranged on the positioning box body (1).

6. The film-sticking device according to claim 5, wherein the roller assembly (4) comprises a sliding frame (41) and a pressure roller (42), two mounting portions (43) are respectively arranged on two ends of the sliding frame (41) and extend downward, the mounting portions (43) are slidably mounted on the sliding rail (11), the pressure roller (42) is axially connected between the two mounting portions (43), and a sliding block (44) is arranged outside the corresponding mounting portion (43) and is slidably mounted on the sliding rail (11), the pressure roller (42) has a cylindrical structure with a variable diameter, and diameters of two end portions of the pressure roller (42) are greater than a diameter of a middle portion of the pressure roller (42);
two sliding slots (14) are formed in on both sides of the positioning box body (1) adjacent to the sliding rail (11); and
a stable plate (45) is arranged at a connection position between the sliding block (44) and the mounting portion (43) and is slidably mounted in the sliding slot (14); the sliding block (44) and the stable plate (45) are integrally connected to the corresponding mounting portion (43).

7. The film-sticking device according to claim 6, wherein an elastic pad (6) is arranged in the positioning box body (1) to allow the roller assembly (4) to transition from the positioning box body (1) to a screen of an electronic device located in the placement slot (2), and the elastic pad (6) is moveable upwards and downwards;

8. The film-sticking device according to claim 7, wherein a receiving slot (17) in communication with the placement slot (2) is formed in the positioning box body (1), and the elastic pad (6) extends from one side wall of the receiving slot (17) away from the placement slot (2) toward an other side wall of the receiving slot (17) adjacent to the placement slot (2); and
a convex strip (61) is arranged on one side of the elastic pad (6) attached to an edge of the electronic device.

9. The film-sticking device according to claim 1, wherein an elastic portion (32) corresponding to the elastic pad (6) is arranged on the positioning frame (3).

10. The film-sticking device according to claim 1, wherein an elastic portion (32) corresponding to the receiving slot (17) is arranged on the positioning frame (3).

11. The film-sticking device according to claim 9 or 10, wherein a mounting hole (33) is defined in the elastic portion (32) for mounting a fastener (74); a second positioning member (34) corresponding to a second positioning hole (712) is arranged on one end of the positioning frame (3) away from the elastic portion (32), and the second positioning member (34) is inserted in the second positioning hole (712).

12. The film-sticking device according to claim 11, wherein the second positioning member (34) has a cylindrical structure with a variable diameter, a diameter of an upper part of the second positioning member (34) is less than a diameter of a lower part of the second positioning member (34); the second positioning hole (712) has a diameter equal to the diameter of the upper part of the second positioning member (34), and the upper part of the second positioning member (34) is inserted in the second positioning hole (712), and the positioning frame (3) is supported by the lower part of the second positioning member (34).

13. The film-sticking device according to claim 1, wherein an elastic pad (6) is arranged on the positioning box body (1), the elastic pad (6) comprises a protrusion (62), a plurality of first positioning members (63) respectively corresponding to first positioning holes (711) are arranged on the protrusion (62); and the first positioning members (63) are respectively inserted in the first positioning holes (711).

14. The film-sticking device according to claim 1, wherein the placement slot (2) is a concave groove structure formed inside the positioning box body (1), a plurality of spacer strips (21) and elastic strips (22) are arranged in the placement slot (2), an avoidance opening (23) is formed in the placement slot (2) to avoid a camera assembly of an electronic device, the spacer strips (21) are fixedly mounted on a bottom of the placement slot (2), and the elastic strips (22) are attached to both inner walls of one end of the placement slot (2) away from the elastic pad (6).

15. The film-sticking device according to claim 1, further comprising the film-sticking assembly (7), the film-sticking assembly (7) comprises a positioning film (71), a pull film (72), and a protective film (73); the positioning film (71) is attached to a top surface of the protective film (73), the protective film (73) is attached to a bottom surface of the pull film (72), and at least one first positioning hole (711) and at least one second positioning hole (712) are defined in the positioning film (71); the film-sticking assembly (7) further comprises a fastener (74) for mounting the positioning film (71) to the positioning frame (3) and detaching the positioning film (71) from the positioning frame (3); and the film-sticking assembly (7) is obliquely mounted on the positioning frame (3).
